# EUROPÄISCHE PATENTSCHRIFT

(11) **EP 3 223 972 B1**
(45) Veröffentlichungstag und Bekanntmachung des Hinweises auf die Patenterteilung: **29.08.2018**
(21) Anmeldenummer: 15783995.2
(22) Anmeldetag: 16.10.2015
(51) Int. Cl.: B21B 35/14, F16D 1/04

(54) **ZAPFENAUFNAHME FÜR EINE TREFFERVERBINDUNG SOWIE WALZENANTRIEBSSTRANG MIT EINER SOLCHEN ZAPFENAUFNAHME**
JOURNAL RECEPTACLE FOR A COUPLING SLEEVE CONNECTION, AND ROLL DRIVE TRAIN HAVING A JOURNAL RECEPTACLE OF THIS TYPE
LOGEMENT DE BROCHE POUR CONNEXION À MANCHON D'ACCOUPLEMENT ET TRAIN D'ENTRAÎNEMENT DE CYLINDRE ÉQUIPÉ D'UN TEL LOGEMENT DE BROCHE

(30) Priorität: 28.11.2014 DE 102014224346
(43) Veröffentlichungstag der Anmeldung: 04.10.2017
(73) Patentinhaber: Voith Patent GmbH, 89522 Heidenheim (DE)
(72) Erfinder: STOCKER, Jürgen, 73466 Lauchheim (DE); MAIER, Dieter, 89537 Giengen (DE); GRAWENHOF, Peter, 89547 Dettingen (DE)
(86) Internationale Anmeldenummer: PCT/EP2015/073973
(87) Internationale Veröffentlichungsnummer: WO 2016/083016

(56) Entgegenhaltungen:
- DE-A1- 2 362 524
- DE-A1- 10 316 261
- DE-U- 1 921 517
- US-A- 3 315 993

## Beschreibung

Die vorliegende Erfindung betrifft ganz allgemein einen Walzenantriebsstrang zum Antrieb einer Walze in einem Walzwerk und im Besonderen eine Zapfenaufnahme für eine Trefferverbindung, insbesondere zum drehfesten Verbinden einer Antriebswelle mit der Walze eines Walzwerks, im Einzelnen gemäß dem Oberbegriff der Ansprüche 1 und 11.

Trefferverbindungen dienen in Walzwerken vorrangig dem schnellen Koppeln beziehungsweise Entkoppeln der Antriebswellen-Arbeitswalzen-Verbindung, wobei die Antriebswellen in der Regel als Gelenkwellen ausgeführt sind, aufgrund dessen, dass die Walzen relativ dicht zueinander positioniert sind und die Antriebsmaschinen in den Antriebssträngen einen gewissen Bauraum benötigen. Bei einer solchen Trefferverbindung wird der Antriebszapfen der Walze, vorliegend als Walzenzapfen bezeichnet, der wenigstens eine, in der Regel zwei abgeflachte Oberflächen zur Drehmomentübertragung aufweist, in eine gegengleich gestaltete Treffernabe der Antriebswelle, insbesondere Gelenkwelle, eingeführt, wobei in der Treffernabe wenigstens eine, insbesondere zwei entsprechende abgeflachte Drehmomentübertragungsflächen vorgesehen sind. Mit Ausnahme der Abflachungen sind die Oberflächen des Walzenzapfens und der Treffernabe in der Regel kreisrund gestaltet, in einem Radialschnitt durch die Treffernabe beziehungsweise den Walzenzapfen gesehen, beziehungsweise zylindrisch gestaltet.

Bei gängigen Ausführungsformen sind die Drehmomentübertragungsflächen in der Treffernabe mit Verschleißplatten ausgekleidet, sodass die Oberfläche der Drehmomentübertragungsflächen in der Regel vollständig durch in der Regel eine Verschleißplatte je Drehmomentübertragungsfläche abgedeckt wird und keine unmittelbare Berührung der Drehmomentübertragungsflächen der Treffernabe mit den Drehmomentübertragungsflächen des Walzenzapfens erfolgt. Diese Verschleißplatten können zum einen aus einem im Verhältnis zur Treffernabe verschleißfesteren Werkstoff hergestellt sein und ermöglichen zum anderen, dass bei auftretendem Verschleiß nicht die gesamte Treffernabe sondern nur die Verschleißplatten ausgetauscht werden müssen. Auch ermöglicht eine solche Ausführungsform eine Nachbearbeitung von verschlissenen Treffern nach einer gewissen Betriebszeit.

Zum druckschriftlichen Stand der Technik wird auf DE 197 10 554 A1 und DE 1 921 517 U verwiesen.

Herkömmlich werden die Verschleißplatten mit Schrauben an der Treffernabe angeschraubt. In der Praxis ergibt sich die Problematik, dass die Befestigungsschrauben sich nach einer gewissen Betriebszeit lösen oder sogar brechen.

Der vorliegenden Erfindung liegt die Aufgabe zugrunde, eine Zapfenaufnahme für eine Trefferverbindung beziehungsweise einen Walzenantriebsstrang der eingangs dargestellten Art derart zu verbessern, dass das genannte Lösen und Brechen der Befestigungsschrauben oder anderer Befestigungsmittel wirksam verhindert werden kann.

Die erfindungsgemäße Aufgabe wird durch eine Zapfenaufnahme mit den Merkmalen von Anspruch 1 und einen Walzenantriebsstrang mit den Merkmalen von Anspruch 12 gelöst. In den abhängigen Ansprüchen sind vorteilhafte und besonders zweckmäßige Ausgestaltungen der Erfindung angegeben.

Der Erfindung liegt die Erkenntnis zugrunde, dass die herkömmlichen Befestigungsschrauben im Laufe der Betriebszeit dynamischen Belastungen unterworfen werden, die sich vermeiden lassen. So kommt es nämlich bei den bisherigen Verschleißplatten zu dem größten Verschleiß im Randbereich der Drehmomentübertragungsfläche in den Zapfenaufnahmen, bezogen auf die Umfangsrichtung der Aufnahmeöffnung. Im mittleren Bereich, das heißt in einem Bereich in der Mitte der Drehmomentübertragungsfläche, der sich beidseitig einer in Axialrichtung der Zapfenaufnahme verlaufenden Mittellinie erstreckt, ist der Verschleiß deutlich geringer. Wenn nun, wie herkömmlich, die Verschleißplatten mit Befestigungsschrauben auf den Drehmomentübertragungsflächen festgeschraubt werden, wobei sich die Befestigungsschrauben durch entsprechende Durchgangsbohrungen in den Verschleißplatten hindurcherstrecken und die Durchgangsbohrungen in einem Bereich mit verhältnismäßig hohem Verschleiß nahe dem Rand der Drehmomentübertragungsflächen positioniert sind, so kommt es zu einer Zug- und Biegebeanspruchung der Befestigungsschrauben, weil die Verschleißplatten im Bereich des hohen Verschleißes unter den Köpfen der Befestigungsschrauben "klappern" oder, bei einteiligen Verschleißplatten, die Verschleißplatten bei jedem Lastwechsel über den Bereich der Mitte mit dem geringeren Verschleiß wechselseitig kippen. Diese dynamischen Belastungen aufgrund der Lockerung im Bereich der Befestigungsschrauben werden erfindungsgemäß dadurch ausgeschlossen, dass eine oder mehrere Verschleißplatten, insbesondere zwei Verschleißplatten je Drehmomentübertragungsfläche, mittels eines sich in Axialrichtung auf der Drehmomentübertragungsfläche erstreckenden Klemmstücks, das über geeignete Verbindungsmittel, wie Schrauben, an der Drehmomentübertragungsfläche angeschlossen ist, formschlüssig auf der Drehmomentübertragungsfläche gehalten werden, insbesondere ohne dass die wenigstens eine Verschleißplatte selbst mit der Drehmomentübertragungsfläche verschraubt ist oder entsprechende Durchgangsbohrungen für Befestigungsschrauben aufweist.

Im Einzelnen weist eine erfindungsgemäße Zapfenaufnahme für eine Trefferverbindung, insbesondere zum drehfesten Verbinden einer Antriebswelle, beispielsweise Gelenkwelle, insbesondere Kreuzgelenkwelle, mit einer Walze eines Walzwerkes eine Treffernabe auf, die eine sich in einer Axialrichtung der Treffernabe erstreckenden Aufnahmeöffnung zur formschlüssigen Aufnahme eines Walzenzapfens umfasst. Die Aufnahmeöffnung weist eine innere sich in der Axialrichtung und über dem Umfang erstreckende Oberfläche mit wenigstens einer Drehmomentübertragungsfläche auf, die zumindest teilweise oder vorteilhaft vollständig mit wenigstens einer Verschleißplatte ausgekleidet ist. Die Verschleißplatte deckt somit die Drehmomentübertragungsfläche mehr oder minder ab und ist im zusammengesetzten Zustand der Trefferverbindung, das heißt bei in die Aufnahmeöffnung eingesetztem Walzenzapfen zwischen der Treffernabe beziehungsweise zwischen der Drehmomentübertragungsfläche der Treffernabe und dem Walzenzapfen beziehungsweise dessen entsprechender Drehmomentübertragungsfläche positioniert.

Damit die Drehmomentübertragungsfläche im Sinne der vorliegenden Erfindung ein Drehmoment von der Treffernabe auf den Walzenzapfen übertragen kann, ist diese mehr oder minder abgeflacht ausgeführt und weicht in einem Radialschnitt durch die Treffernabe von der Kreisform ab. Es ist jedoch nicht erforderlich, dass diese Drehmomentübertragungsfläche vollständig eben ausgeführt ist. Insbesondere wird, wie nachfolgend noch erläutert wird, die Drehmomentübertragungsfläche in der Treffernabe durch zwei planparallele ebene Abschnitte mit einer dazwischen eingebrachten, in der Axialrichtung verlaufenden Nut ausgebildet.

Die wenigstens eine Verschleißplatte ist nun erfindungsgemäß mittels wenigstens einem sich in der Axialrichtung auf der Drehmomentübertragungsfläche erstreckenden Klemmstück, das durch Verbindungsmittel an der Drehmomentübertragungsfläche angeschlossen ist, formschlüssig auf der Drehmomentübertragungsfläche gehalten.

Besonders vorteilhaft ist das Klemmstück in Umfangsrichtung der Aufnahmeöffnung in der Treffernabe gesehen in einem mittleren Bereich, der sich in der Axialrichtung erstreckt, insbesondere entlang einer in der Axialrichtung verlaufenden Mittellinie auf der Drehmomentübertragungsfläche positioniert, weil dort, wie dargelegt, der geringste Verschleiß auftritt und somit ein Lockern des Klemmstückes, wenn dieses beispielsweise auf der Drehmomentübertragungsfläche festgeschraubt ist, vermieden wird.

Die Verbindungsmittel sind beispielsweise als Gewindestifte oder Schrauben ausgeführt, insbesondere als Senkschrauben im Klemmstück, die von der freien Oberfläche des Klemmstücks aus, das heißt von der dem Anschluss des Klemmstücks an die Drehmomentübertragungsfläche abgewandten Seite aus, durch das Klemmstück hindurch in die Treffernabe eingeschraubt werden. Eine vorteilhafte alternative Ausführungsform weist jedoch Befestigungsschrauben oder Gewindestifte oder andere Verbindungsmittel auf, die radial von außen durch Durchgangsöffnungen in der Treffernabe von der Drehmomentübertragungsfläche aus in das Klemmstück eingeschraubt sind, sodass das Klemmstück nur Sacköffnungen und keine Durchgangsbohrungen aufweisen muss. Grundsätzlich reicht auch ein Verbindungsmittel je Verschleißplatte aus.

Gemäß einer günstigen Ausführungsform der Erfindung ist das Klemmstück in eine in die Drehmomentübertragungsfläche eingebrachte Nut eingesetzt. Damit wird das Klemmstück besonders exakt und sicher innerhalb der Aufnahmeöffnung der Treffernabe gehalten. Auch ist es dann besonders leicht möglich, das Klemmstück radial von innen gegenüber der oder den Verschleißplatten zu verspannen, wobei gleichzeitig durch die Nut eine sichere seitliche Führung des Klemmstücks beim Verspannen erzielt wird. Besonders vorteilhaft ist das Klemmstück mit einer Übergangs- oder Presspassung in die Nut der Treffernabe beziehungsweise in die Nut in der Drehmomentübertragungsfläche eingesetzt.

Gemäß einer vorteilhaften Ausführungsform der Erfindung weist das Klemmstück in einem Radialschnitt durch die Treffernabe gesehen eine T-Form auf. Eine solche T-Form kann mit ihrem Fuß in die genannte Nut eingebracht sein und durch die beiden Schenkel können zwei auf entgegengesetzten Seiten des Klemmstücks entlang der Axialrichtung positionierte Verschleißplatten teilweise abgedeckt und gegen die (selbe) Drehmomentübertragungsfläche gehalten werden. Das teilweise Überdecken kann durch eine Aussparung im Randbereich der Verschleißplatte oder auch durch eine in die Verschleißplatte seitlich eingebrachte Nut, in welche das Klemmstück mit einem Schenkel eingreift, erreicht werden.

Die wenigstens eine Verschleißplatte, insbesondere zwei Verschleißplatten je Drehmomentübertragungsfläche, die sich jeweils vollständig über die gesamte Drehmomentübertragungsfläche in Axialrichtung erstrecken, weisen gemäß einer Ausführungsform in einem Radialschnitt durch die Treffernabe gesehen eine T-Form auf, die insbesondere um 180° gedreht zu der T-Form des Klemmstücks ausgerichtet ist. Hierdurch wird die genannte Aussparung im Randbereich der Verschleißplatte ausgebildet, in die dann das Klemmstück mit einem Schenkel eingreifen kann.

Um die wenigstens eine Verschleißplatte nicht nur durch das Klemmstück zu halten, kann die wenigstens eine Verschleißplatte an einer dem Klemmstück abgewandten Seite mit der Treffernabe eine Hinterschneidung ausbilden, das bedeutet in eine Aussparung der Treffernabe eingreifen, sodass ein Abheben der Verschleißplatte an dieser Seite von der Drehmomentübertragungsfläche durch Formschluss verhindert wird. Bei einer T-Form der Verschleißplatte kann diese mit einem Schenkel die Hinterschneidung ausbilden, das heißt in diese Aussparung in der Treffernabe eingreifen. Der andere Schenkel wird dann vorteilhaft vom, beispielsweise ebenfalls T-förmigen Klemmstück zur Ausbildung einer Hinterschneidung abgedeckt.

Gemäß einer alternativen Ausführungsform verlaufen die aneinander anliegenden Anlageflächen des Klemmstücks und der Verschleißplatte schräg zur darunterliegenden Oberfläche der Drehmomentübertragungsfläche. So verjüngt sich in einem Radialschnitt durch die Treffernabe gesehen das Klemmstück ausgehend von seinem freien, dem Anschluss an der Drehmomentübertragungsfläche abgewandten Ende in Richtung des Anschlussendes, insbesondere beidseitig oder beidseitig konisch, um eine Hinterschneidung mit der an dem Klemmstück anliegenden Seite der wenigstens einen Verschleißplatte auszubilden. Zusammen mit einer entsprechenden Gestaltung der dem Klemmstück abgewandten Seite der Verschleißplatte und der hier anliegenden Anlagefläche der Treffernabe kann die Verschleißplatte in einer Schwalbenschwanznut gehalten werden, die auf der einen Seite durch das Klemmstück und auf der anderen Seite durch die Treffernabe gebildet wird.

Als besonders günstige Ausführungsform hat sich erwiesen, wenn das Klemmstück in Axialrichtung zwischen zwei Verschleißplatten eingeschlossen ist, wobei das Klemmstück zugleich diese beiden Verschleißplatten, die sich vorteilhaft über der gesamten Länge in Axialrichtung der Drehmomentübertragungsfläche erstrecken, wobei vorteilhaft auch das Klemmstück sich entsprechend über der gesamten axialen Länge der Drehmomentübertragungsfläche erstrecken kann, formschlüssig auf der Drehmomentübertragungsfläche hält, insbesondere zusammen mit jeweils einer entsprechenden Hinterschneidung auf der dem Klemmstück abgewandten Seite, die in eine Nut der Treffernabe eingreift. Beide Verschleißplatten können entweder in einem Radialschnitt durch die Treffernabe oder insgesamt eine identische Form aufweisen.

Ein erfindungsgemäßer Walzenantriebsstrang dient dem Antrieb einer Walze in einem Walzwerk. Er weist wenigstens eine Antriebswelle mit einem walzenseitigen Ende auf, das zum Anschluss an einen Antriebszapfen der Walze, der als Walzenzapfen ausgeführt ist, ausgebildet ist.

Erfindungsgemäß weist das walzenseitige Ende der Antriebswelle eine Zapfenaufnahme der erfindungsgemäßen Art auf.

Auch hier ist die Antriebswelle in der Regel als Gelenkwelle ausgeführt, beispielsweise als Kreuzgelenkwelle.

Durch die erfindungsgemäße Positionierung eines Klemmstücks im weniger belasteten Trefferbreich mit geringen elastischen Verformungen wird die herkömmliche Lockerung der Halterung der Verschleißplatten vermieden. Insbesondere liegt das Klemmstück nicht unmittelbar im Kraftfluss zwischen der Treffernabe und dem Walzenzapfen, sondern seitlich neben diesen Kraftflussbereichen, die durch die äußeren Abschnittsbereiche der Drehmomentübertragungsflächen, bezogen auf die Umfangsrichtung der Aufnahmeöffnung, gebildet werden. Dynamische Belastungen von Befestigungsschrauben werden weitgehend vermieden. Die erfindungsgemäße Lösung gewährleistet den sicheren Betrieb der Trefferverbindung ohne die Gefahr von gelockerten oder gebrochenen Schrauben.

Die Erfindung soll nachfolgend anhand von Ausführungsbeispielen und den Figuren exemplarisch beschrieben werden.

Es zeigen:
- Figur 1: ein erstes Ausführungsbeispiel der Erfindung mit zwei durch ein Klemmstück gehaltenen Verschleißplatten je Drehmomentübertragungsfläche;
- Figur 2: ein Ausführungsbeispiel entsprechend der Figur 1, jedoch mit zusätzlicher Sicherung der Verschleißplatten mit einem Hinterschnitt in der Treffernabe;
- Figur 3: eine Abwandlung des Ausführungsbeispiels gemäß der Figur 2 mit konisch gestalteten Verschleißplatten anstelle der T-förmigen Verschleißplatten;
- Figur 4: exemplarisch einen erfindungsgemäßen Walzenantriebsstrang.

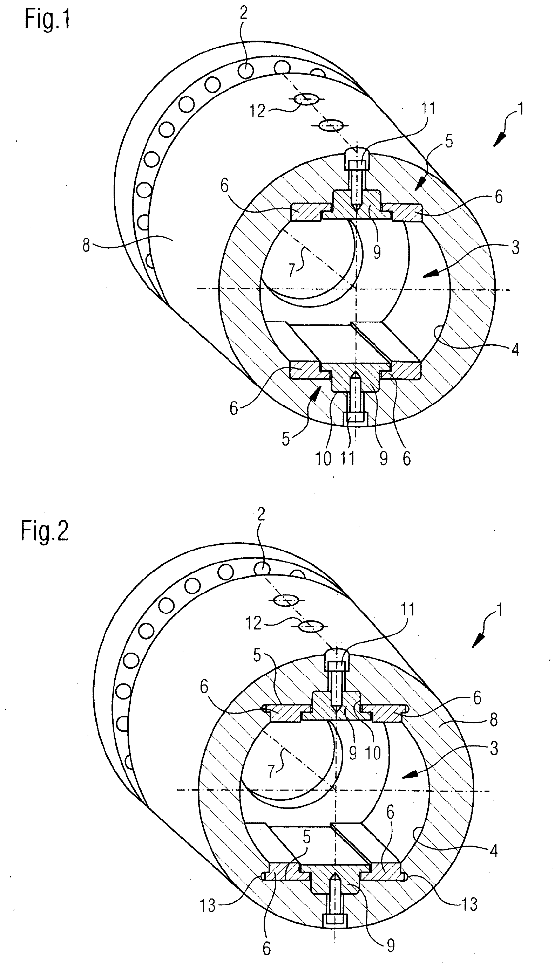

In der Figur 1 ist eine Zapfenaufnahme 1 exemplarisch dargestellt, die am walzenseitigen Ende der Antriebswelle, insbesondere Kreuzgelenkwelle eines Walzenantriebsstrangs, angeschlossen werden kann, beispielsweise mittels einer Flanschverschraubung 2. Alternativ wird die Zapfenaufnahme 1 integral im walzenseitigen Ende der Antriebswelle ausgebildet.

Die Zapfenaufnahme 1 weist eine Aufnahmeöffnung 3 auf, die zum Einführen eines Walzenzapfens der Walze (nicht dargestellt) bestimmt und ausgebildet ist. Die Aufnahmeöffnung 3 weist eine innere Oberfläche 4 auf, welche mit ihren außerhalb der Drehmomentübertragungsflächen 5 positionierten Abschnitten die äußere Oberfläche des Walzenzapfens unmittelbar berührt. Die Drehmomentübertragungsflächen 5 hingegen sind mit Verschleißplatten 6 ausgekleidet, vorliegend zwei Verschleißplatten 6 je Drehmomentübertragungsfläche 5.

Die Verschleißplatten 6 erstrecken sich in Richtung der Axialrichtung 7 der Treffernabe 8, welche die Zapfenaufnahme 1 ausbildet und die Aufnahmeöffnung 3 begrenzt. In Axialrichtung betrachtet sind jeweils zwei Verschleißplatten 6 nebeneinander positioniert, gehalten von einem zwischen diesen positionierten Klemmstück 9.

Jedes Klemmstück 9 ist in eine Nut 10 der jeweiligen Drehmomentübertragungsfläche 5 eingesetzt, die im Übrigen, das heißt bis auf die Nut 10, eben ausgebildet ist. Jedes Klemmstück 9 ist mittels Schrauben 11 in der Nut 10 verschraubt, wobei die Schrauben 11 im gezeigten Ausführungsbeispiel entlang einer Mittellinie, die sich in Axialrichtung 7 erstreckt, der Drehmomentübertragungsflächen 5 positioniert sind, sodass der Anschlussbereich der Klemmstücke 9 auf den Drehmomentübertragungsflächen 5 außerhalb der im Kraftfluss positionierten Randbereiche positioniert sind, welche mit den Verschleißplatten 6 abgedeckt sind.

Gemäß dem Ausführungsbeispiel in der Figur 1 weisen die Klemmstücke 9 in dem gezeigten Radialschnitt eine T-Form auf, dessen Fuß jeweils in die Nut 10 eingesetzt ist und dessen beiden Schenkel eine Aussparung im Randbereich der Verschleißplatten 6 übergreifen, sodass die Verschleißplatten 6 formschlüssig auf den Drehmomentübertragungsflächen 5 gehalten werden.

Im gezeigten Ausführungsbeispiel sind die Klemmstücke 9 radial von außen durch die Treffernabe 8 hindurch verschraubt, siehe die entsprechenden Durchgangsbohrungen 12 in der Treffernabe 8.

Beim Ausführungsbeispiel gemäß der Figur 2, das weitgehend jenem der Figur 1 entspricht, wobei sich entsprechende Merkmale mit sich entsprechenden Bezugszeichen gekennzeichnet sind, sind auch die Verschleißplatten 6 in dem gezeigten Radialschnitt T-förmig ausgeführt, jedoch um 180° gedreht zur T-Form der Klemmstücke 9 angeordnet. Hierdurch ist es möglich, dass die Verschleißplatten 6 mit ihrem dem Klemmstück 9 abgewandten Schenkel in eine Haltenut 13 in der Treffernabe 8 eingreifen, um eine Hinterschneidung zu bilden, die ein Abheben der Verschleißplatten 6 von den Drehmomentübertragungsflächen 5 bei eingesetztem Klemmstück 9 sicherer verhindern. Die Oberfläche des Fußes der Verschleißplatten 6 bildet demnach die Anlagefläche für den hier nicht näher gezeigten Walzenzapfen.

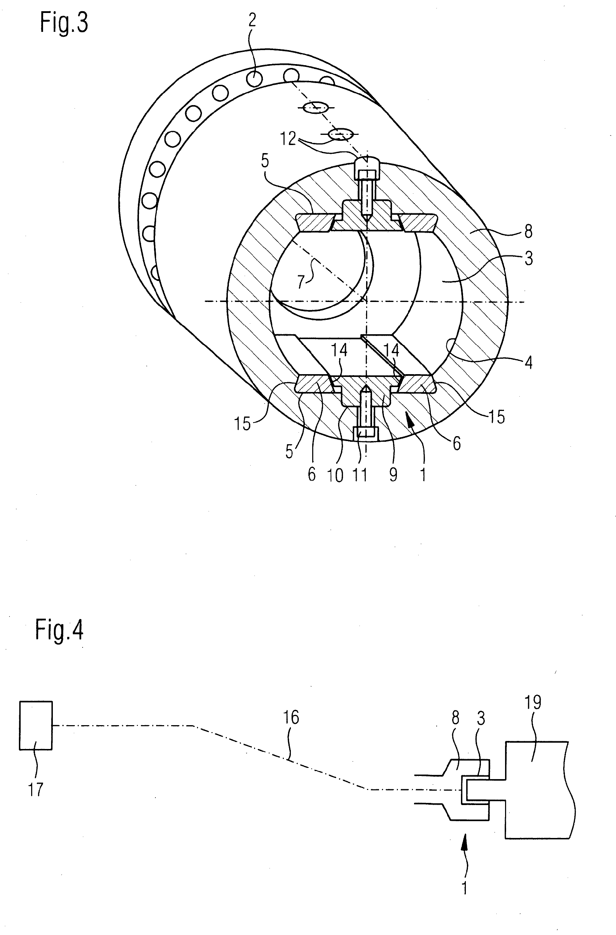

Bei der Ausgestaltung gemäß der Figur 3 wird eine gleichartige beidseitige Verriegelung jeder Verschleißplatte 6 auf den Drehmomentübertragungsflächen 5 erreicht, auf der einen Seite durch schräg zur Oberfläche der Drehmomentübertragungsflächen 5 positionierte Anlageflächen 14 zwischen Klemmstück 9 und Verschleißplatten 6 und auf der anderen Seite zwischen entgegengesetzt schräg positionierten Anlageflächen 15 zwischen den Verschleißplatten 6 und der Treffernabe 8. Durch die konische Gestaltung der Klemmstücke 9 in Verbindung mit der Ausgestaltung der Anlageflächen 15 werden die Verschleißplatten 6 jeweils in einer Schwalbenschwanznut gehalten.

In der Figur 4 ist schematisch die Positionierung einer Zapfenaufnahme 1 am axialen Ende einer hier als Kreuzgelenkwelle ausgeführten Antriebswelle 16 eines Walzenantriebsstrangs dargestellt. Die Antriebswelle 16 wird zumindest mittelbar von der Antriebsmaschine 17 angetrieben. Die Zapfenaufnahme 1 mit ihrer Treffernabe 9 wird auf den Walzenzapfen 18 der angetriebenen Walze 19 aufgeschoben und über die hier nicht näher dargestellten Drehmomentübertragungsflächen 5 angetrieben.

## Patentansprüche

1. Zapfenaufnahme (1) für eine Trefferverbindung, insbesondere zum drehfesten Verbinden einer Antriebswelle (16) wie Gelenkwelle mit einer Walze (19) eines Walzwerkes,
1.1 mit einer Treffernabe (8), die eine sich in einer Axialrichtung (7) der Treffernabe (8) erstreckende Aufnahmeöffnung (3) zur formschlüssigen Aufnahme eines Walzenzapfens (18) aufweist; wobei
1.2 die Aufnahmeöffnung (3) eine innere, sich in der Axialrichtung (7) und über dem Umfang erstreckende Oberfläche (4) mit wenigstens einer Drehmomentübertragungsfläche (5) aufweist, die zumindest teilweise mit wenigstens einer Verschleißplatte (6) ausgekleidet ist;
**dadurch gekennzeichnet, dass**
1.3 die wenigstens eine Verschleißplatte (6) mittels wenigstens einem sich in der Axialrichtung (7) auf der Drehmomentübertragungsfläche (5) erstreckenden Klemmstück (9), das durch wenigstens ein Verbindungsmittel an der Drehmomentübertragungsfläche (5) angeschlossen ist, formschlüssig auf der Drehmomentübertragungsfläche (5) gehalten wird.

2. Zapfenaufnahme (1) gemäß Anspruch 1, **dadurch gekennzeichnet, dass** das Klemmstück (9) in Umfangsrichtung gesehen in einem mittleren Bereich, insbesondere entlang einer in der Axialrichtung (7) verlaufenden Mittellinie auf der Drehmomentübertragungsfläche (5) positioniert ist.

3. Zapfenaufnahme (1) gemäß einem der Ansprüche 1 oder 2, **dadurch gekennzeichnet, dass** die Verbindungsmittel Gewindestifte und/oder Schrauben (11) sind.

4. Zapfenaufnahme (1) gemäß einem der Ansprüche 1 bis 3, **dadurch gekennzeichnet, dass** das Klemmstück (9) in eine in die Drehmomentübertragungsfläche (5) eingebrachte Nut (10) eingesetzt ist, insbesondere mit einer Übergangs- oder Presspassung.

5. Zapfenaufnahme (1) gemäß einem der Ansprüche 1 bis 4, **dadurch gekennzeichnet, dass** das Klemmstück (9) in einem Radialschnitt durch die Treffernabe (8) gesehen eine T-Form aufweist, die insbesondere mit ihrem Fuß in die Nut (10) eingebracht ist und die wenigstens eine Verschleißplatte (6) teilweise überdeckt und/oder in eine in diese eingebrachte Verschleißplattennut oder Aussparung eingreift.

6. Zapfenaufnahme (1) gemäß einem der Ansprüche 1 bis 5, **dadurch gekennzeichnet, dass** eine Vielzahl von Verschleißplatten (6) mittels des Klemmstückes (9) formschlüssig auf der Drehmomentübertragungsfläche (5) gehalten werden.

7. Zapfenaufnahme (1) gemäß einem der Ansprüche 1 bis 6, **dadurch gekennzeichnet, dass** die wenigstens eine Verschleißplatte (6) in einem Radialschnitt durch die Treffernabe (8) gesehen eine T-Form aufweist, die insbesondere um 180° gedreht zu der T-Form des Klemmstückes (9) ausgerichtet ist.

8. Zapfenaufnahme (1) gemäß einem der Ansprüche 1 bis 7, **dadurch gekennzeichnet, dass** die wenigstens eine Verschleißplatte (6) an einer dem Klemmstück (9) abgewandten Seite mit der Treffernabe (8) eine Hinterschneidung ausbildet.

9. Zapfenaufnahme (1) gemäß einem der Ansprüche 1 bis 7, **dadurch gekennzeichnet, dass** sich das Klemmstück (9) in einem Radialschnitt durch die Treffernabe (8) von seinem freien dem Anschluss an der Drehmomentübertragungsfläche (5) abgewandten Ende in Richtung des Anschlussendes verjüngt, insbesondere einseitig oder beidseitig konisch verjüngt, und eine Hinterschneidung mit einer an dem Klemmstück (9) anliegenden Seite der wenigstens einen Verschleißplatte (6) ausbildet.

10. Zapfenaufnahme (1) gemäß der Ansprüche 8 und 9, **dadurch gekennzeichnet, dass** die wenigstens eine Verschleißplatte (6) in einer auf der einen Seite durch das Klemmstück (9) und auf der anderen Seite durch die Treffernabe (8) gebildeten Schwalbenschwanznut gehalten wird.

11. Zapfenaufnahme (1) gemäß einem der Ansprüche 1 bis 10, **dadurch gekennzeichnet, dass** das Klemmstück (9) in Axialrichtung zwischen zwei Verschleißplatten (6) eingeschlossen ist und diese formschlüssig in der Treffernabe (8) hält, wobei die Verschleißplatten (6) insbesondere in einem Radialschnitt durch die Treffernabe (8) oder insgesamt eine identische Form aufweisen.

12. Walzenantriebsstrang
12.1 mit wenigstens einer Antriebswelle (16);
12.2 mit einem walzenseitigen Ende der Antriebswelle (16), das zum Anschluss an einen Antriebszapfen einer Walze (19), der als Walzenzapfen (18) ausgeführt ist, ausgebildet ist;
**dadurch gekennzeichnet, dass**
12.3 das walzenseitige Ende der Antriebswelle (16) eine Zapfenaufnahme (1) gemäß einem der Ansprüche 1 bis 11 aufweist.

## Claims

1. A journal receptacle (1) for a wobbler connection, in particular for the rotationally secure connection of a drive shaft (16), such as an articulated shaft, to a roll (19) of a rolling mill,
1.1 comprising a wobbler hub (8), which has a receiving opening (3), extending in an axial direction (7) of the wobbler hub (8), for the positive-locking reception of a roll journal (18); wherein
1.2 the receiving opening (3) has an inner surface (4), extending in the axial direction (7) and over the periphery and having at least one torque transmission surface (5), which latter is clad at least partially with at least one wearing plate (6);
**characterized in that**
1.3 the at least one wearing plate (6) is held in a positive-locking manner on the torque transmission surface (5) by means of at least one clamping piece (9), which extends in the axial direction (7) on the torque transmission surface (5) and which is connected to the torque transmission surface (5) by at least one connecting means.

2. Journal receptacle (1) according to Claim 1, **characterized in that** the clamping piece (9), viewed in the peripheral direction, is positioned in a central region, in particular along a center line, running in the axial direction (7), on the torque transmission surface (5).

3. Journal receptacle (1) according to one of Claims 1 or 2, **characterized in that** the connecting means are threaded pins and/or screws (11).

4. Journal receptacle (1) according to one of Claims 1 to 3, **characterized in that** the clamping piece (9) is inserted, in particular with a transition fit or press fit, in a groove (10) made in the torque transmission surface (5).

5. Journal receptacle (1) according to one of Claims 1 to 4, **characterized in that** the clamping piece (9), viewed in a radial section through the wobbler hub (8), has a T-shape, which in particular is inserted with its foot in the groove (10) and which partially covers the at least one wearing plate (6) and/or engages in a wearing plate groove or recess made in this same.

6. Journal receptacle (1) according to one of Claims 1 to 5, **characterized in that** a multiplicity of wearing plates (6) are held by means of the clamping piece (9) in a positive-locking manner on the torque transmission surface (5).

7. Journal receptacle (1) according to one of Claims 1 to 6, **characterized in that** the at least one wearing plate (6), viewed in a radial section through the wobbler hub (8), has a T-shape, which in particular is oriented rotated through 180° relative to the T-shape of the clamping piece (9).

8. Journal receptacle (1) according to one of Claims 1 to 7, **characterized in that** the at least one wearing plate (6), on a side facing away from the clamping piece (9), forms with the wobbler hub (8) an undercut.

9. Journal receptacle (1) according to one of Claims 1 to 7, **characterized in that** the clamping piece (9), in a radial section through the wobbler hub (8), tapers from its free end, facing away from the connection to the torque transmission surface (5), in the direction of the connection end, in particular on one side or both sides conically, and forms an undercut with that side of the at least one wearing plate (6) which bears against the clamping piece (9).

10. Journal receptacle (1) according to Claims 8 and 9, **characterized in that** the at least one wearing plate (6) is held in a dovetail groove formed on one side by the clamping piece (9) and on the other side by the wobbler hub (8).

11. Journal receptacle (1) according to one of Claims 1 to 10, **characterized in that** the clamping piece (9) is enclosed in the axial direction between two wearing plates (6) and holds these in a positive-locking manner in the wobbler hub (8), wherein the wearing plates (6) have, in particular in a radial section through the wobbler hub (8) or in total, an identical shape.

12. Roll drive train
12.1 comprising at least one drive shaft (16);
12.2 comprising a roll-side end of the drive shaft (16), which end is configured for connection to a drive journal of a roll (19), said drive journal being constructed as a roll journal (18);
**characterized in that**
12.3 the roll-side end of the drive shaft (16) has a journal receptacle (1) according to one of Claims 1 to 11.

## Revendications

1. Logement de broche (1) pour une connexion à un manchon d'accouplement, en particulier pour la connexion solidaire en rotation d'un arbre d'entraînement (16) tel qu'un arbre d'articulation, à un cylindre (19) d'un laminoir,
1.1 comprenant un moyeu de manchon d'accouplement (8) qui présente une ouverture de réception (3) s'étendant dans une direction axiale (7) du moyeu de manchon d'accouplement (8) et qui est destinée à recevoir par complémentarité de formes une broche de cylindre (18) ;
1.2 l'ouverture de réception (3) présentant une surface intérieure (4) s'étendant dans la direction axiale (7) et sur la périphérie et présentant au moins une face de transmission de couple (5) qui est revêtue au moins partiellement d'au moins une plaque d'usure (6) ;
**caractérisé en ce que**
1.3 l'au moins une plaque d'usure (6) est maintenue par complémentarité de formes sur la face de transmission de couple (5) au moyen d'au moins une pièce de serrage (9) s'étendant dans la direction axiale (7) sur la face de transmission de couple (5) et qui est raccordée par au moins un moyen de liaison à la face de transmission de couple (5).

2. Logement de broche (1) selon la revendication 1, **caractérisé en ce que** la pièce de serrage (9), vu dans la direction périphérique, est positionnée dans une région centrale, en particulier le long d'un axe médian s'étendant dans la direction axiale (7), sur la face de transmission de couple (5) .

3. Logement de broche (1) selon l'une quelconque des revendications 1 ou 2, **caractérisé en ce que** les moyens de liaison sont des goupilles filetées et/ou des vis (11).

4. Logement de broche (1) selon l'une quelconque des revendications 1 à 3, **caractérisé en ce que** la pièce de serrage (9) est insérée dans une rainure (10) réalisée dans la face de transmission de couple (5), en particulier avec un ajustement de transition ou un ajustement serré.

5. Logement de broche (1) selon l'une quelconque des revendications 1 à 4, **caractérisé en ce que** la pièce de serrage (9) présente une forme en T, vu en coupe radiale à travers le moyeu de manchon d'accouplement (8), qui est introduite notamment avec sa base dans la rainure (10) et qui recouvre au moins en partie une plaque d'usure (6) et/ou qui s'engage dans une rainure de plaque d'usure ou un évidement réalisé dans celle-ci.

6. Logement de broche (1) selon l'une quelconque des revendications 1 à 5, **caractérisé en ce qu'**une pluralité de plaques d'usure (6) sont retenues par complémentarité de formes au moyen de la pièce de serrage (9) sur la face de transmission de couple (5) .

7. Logement de broche (1) selon l'une quelconque des revendications 1 à 6, **caractérisé en ce que** l'au moins une plaque d'usure (6) présente une forme en T, vu en coupe radiale à travers le moyeu de manchon d'accouplement (8), qui est orientée notamment de manière tournée de 180° par rapport à la forme en T de la pièce de serrage (9).

8. Logement de broche (1) selon l'une quelconque des revendications 1 à 7, **caractérisé en ce que** l'au moins une plaque d'usure (6) constitue, au niveau d'un côté opposé à la pièce de serrage (9), une contre-dépouille avec le moyeu de manchon d'accouplement (8).

9. Logement de broche (1) selon l'une quelconque des revendications 1 à 7, **caractérisé en ce que** la pièce de serrage (9) se rétrécit dans une portion radiale à travers le moyeu de manchon d'accouplement (8) depuis son extrémité libre opposée au raccord au niveau de la face de transmission de couple (5) dans la direction de l'extrémité de raccordement, en particulier se rétrécit de manière conique d'un côté ou des deux côtés, et constitue une contre-dépouille avec un côté de l'au moins une plaque d'usure (6) s'appliquant contre la pièce de serrage (9).

10. Logement de broche (1) selon l'une quelconque des revendications 8 et 9, **caractérisé en ce que** l'au moins une plaque d'usure (6) est retenue dans une rainure en queue d'aronde formée d'un côté par la pièce de serrage (9) et de l'autre côté par le moyeu de manchon d'accouplement (8).

11. Logement de broche (1) selon l'une quelconque des revendications 1 à 10, **caractérisé en ce que** la pièce de serrage (9) est insérée dans la direction axiale entre deux plaques d'usure (6) et retient celles-ci par complémentarité de formes dans le moyeu de manchon d'accouplement (8), les plaques d'usure (6) présentant notamment, en coupe radiale à travers le moyeu de manchon d'accouplement (8), ou dans l'ensemble, une forme identique.

12. Chaîne d'entraînement à cylindres
12.1 comprenant au moins un arbre d'entraînement (16) ;
12.2 avec une extrémité côté cylindre de l'arbre d'entraînement (16) qui est réalisée pour le raccordement à une broche d'entraînement d'un cylindre (19) qui est réalisée sous forme de broche de cylindre (18) ;
**caractérisée en ce que**
12.3 l'extrémité côté cylindre de l'arbre d'entraînement (16) présente un logement de broche (1) selon l'une quelconque des revendications 1 à 11.
